# EUROPÄISCHE PATENTSCHRIFT

(11) **EP 0 719 582 B1**
(45) Veröffentlichungstag und Bekanntmachung des Hinweises auf die Patenterteilung: **03.03.1999**
(21) Anmeldenummer: 95250285.4
(22) Anmeldetag: 20.11.1995
(51) Int. Cl.: B01F 7/00, B01F 7/10, B01J 19/18

(54) **Reaktorvorrichtung für fliessfähige und höherviskose Medien**
Reactor for free-flowing and higher-viscosity substances
Réacteur pour substances à écoulement facile et substances à viscosité élevée

(30) Priorität: 30.12.1994 DE 4447422; 12.09.1995 DE 29515322 U
(43) Veröffentlichungstag der Anmeldung: 03.07.1996
(73) Patentinhaber: KARL FISCHER INDUSTRIEANLAGEN GMBH, D-13509 Berlin (DE)
(72) Erfinder: Schulz van Endert, Eike, D-13467 Berlin (DE); Schröder, Klaus, D-13509 Berlin (DE); Hoffmann, Hans-Peter, D-10439 Berlin (DE)
(74) Vertreter: Pfenning, Meinig & Partner

(56) Entgegenhaltungen:
- DE-A- 1 903 846
- DE-A- 2 100 615
- DE-A- 2 142 456
- DE-A- 2 309 027
- FR-A- 1 273 876
- FR-A- 2 075 438
- GB-A- 1 084 724

## Beschreibung

Die Erfindung betrifft eine Reaktorvorrichtung für fließfähige und höherviskose Medien nach dem Oberbegriff des Hauptanspruchs.

Aus der DE 21 00 615 ist ein Reaktionsgefäß für Stoffe in fließfähigem Zustand, insbesondere für die Polykondensation von Präpolymeren zu Polyester mit hohem Molekulargewicht, bekannt, das aus einem horizontal ausgerichteten Reaktorgehäuse mit einem Einlaß am einen und einem Auslaß am anderen Ende und einer im unteren Bereich des Reaktorinnenraums mit geringem Spiel um eine in Richtung der Längsachse des Reaktorgehäuses verlaufenden Achse drehbaren Einrichtung zum Bewegen und Fördern des fließfähigen Stoffes besteht. Die drehbare Bewege- und Fördereinrichtung ist als an koaxialen Stummelwellen befestigter Tragrahmen ausgebildet, an dem Scheiben im Bereich ihrer Umfänge befestigt sind. Die Scheiben sind aufeinanderfolgend in Richtung der Rotationsachse gegenüber dieser derart geneigt angeordnet, daß von den beiden Punkten, die auf demselben Durchmesser am Umfang einer jeden Scheibe liegen und jeweils einen kleinsten Abstand von jeder der beiden Stirnseiten des Reaktorgehäuses besitzen, die jeweils einer Stirnseiten näherliegenden Punkte aller Scheiben auf einer zur Rotationsachse koaxialen Schraubenlinie liegen. Die durch diese gedachte Schraubenlinie verbundenen Punkte werden als Spurpunkte bezeichnet. Hierdurch wird eine Förderung des Mediums vom Einlaß zum Auslaß erreicht.

Bei einem solchen bekannten Reaktionsgefäß werden zum Beispiel fließfähige und viskose Monomere und Präpolymere am Einlaß des Reaktorgehäuses zugeführt, im Reaktor bewegt, lokal vermischt und durch das Gehäuse gefördert, um dadurch den Ablauf eines Polymerisationsprozesses zu bewirken. Die Polymerisationsprodukte werden am Auslaß ausgetragen. Das in dem Reaktor vorhandene Medium wird durch jede umlaufende Scheibe lokal vermischt und emporgehoben, wobei sich auf den Scheiben Produktfilme und Schlieren ausbilden, während das viskose Medium im Verlauf der Drehbewegung von den Scheiben abläuft. Während der mechanischen Einwirkung auf das reagierende Medium bildet sich aus den Ausgangsstoffen das gewünschte Polymer, während freiwerdende Reaktionsbestandteile ausdampfen und als Brüden abgezogen werden.

Der Erfindung liegt die Aufgabe zugrunde, eine Reaktorvorrichtung entsprechend dem Stand der Technik derart weiterzubilden, daß bei relativ einfacher Konstruktion mit verbesserter Stabilität gegen Verdrehung und Durchbiegung ein Reaktionsprodukt mit herausragender Qualität erzielt wird.

Diese Aufgabe wird erfindungsgemäß durch die kennzeichnenden Merkmale des Hauptanspruchs in Verbindung mit den Merkmalen des Oberbegriffs gelöst.

Dadurch, daß der Rotor als mit den Stummelwellen verbundener und mit Durchbrechungen versehener Hohlzylinder ausgebildet ist, auf dem die ringförmigen Elemente quer zur Längsachse des Reaktorgehäuses befestigt sind, wird einerseits die Stabilität erhöht und andererseits kann die Verweildauer des Mediums durch entsprechende Ausbildung und Anzahl der ringförmigen Elemente gezielt gesteuert werden. Der mit Durchbrechungen versehene Hohlzylinder hat wegen seines großen mechanischen Widerstandsmomentes eine hohe Biegesteifigkeit, so daß Durchbiegungen äußerst gering sind. Gleichzeitig unterstützen die Durchbrechungen im Hohlzylinder die Durchmischung des Mediums unter Bildung von freien Flächen, die das Ausdampfen fördern.

Durch die in den Unteransprüchen angegebenen Maßnahmen sind vorteilhafte Weiterbildungen und Verbesserungen möglich.

Werden die ringförmigen Elemente gegen die Rotationsachse geneigt angeordnet, führen diese eine Taumelbewegung aus, die lokal eine stärkere Durchmischung der Polymerschmelze bewirkt. Durch die geneigten ringförmigen Elemente wird das Medium zusätzlich vom Einlaß zum Austragungskonus gefördert. Der Neigungswinkel läßt sich so wählen, daß ein genau definiertes Verweilzeitspektrum über die gesamte Reaktorlänge erzeugt wird.

Eine günstige Anordnung der ringförmigen Elemente wird dadurch erreicht, daß die ringförmigen Elemente derart geneigt sind, daß ihre Spurpunkte über die Länge des Rotors eine Schraubenlinie bilden. Dabei ist der Spurpunkt eines ringförmigen Elements derjenige Punkt, der in bezug auf eine der beiden Stirnseiten des Gehäuses den kleinsten Abstand besitzt. Dabei genügt es wenn die ringförmigen Elemente gruppenweise einen Spurpunkt besitzen, der auf einer derartigen Schraubenlinie liegt.

Mit dieser Anordnung wird eine besonders gute Förderung erreicht, wenn die ringförmigen Elemente die axiale Bewegung des Mediums nicht zu stark behindern. Dazu muß einerseits der Spalt zwischen Gehäuse und Außendurchmesser der ringförmigen Elemente so gewählt werden, daß die sich drehenden ringförmigen Elemente dem Fluß des Mediums einen Widerstand entgegensetzen, der kleiner ist als die durch den Spurpunktversatz erreichte Förderung. Andererseits müssen die ringförmigen Elemente und Scheiben mit solchen Durchbrüchen versehen werden, daß die ansteigende Viskosität des Mediums entlang des Förderweges berücksichtigt wird.

Besonders vorteilhaft ist, daß in Förderrichtung die freien Querschnitte der ringförmigen Elemente und/-oder die Abstände der ringförmigen Elemente und/oder die Größe der Durchbrechungen des Hohlzylinders zunehmen, wobei dies zonenweise erfolgen kann, da aufgrund dieser Maßnahmen eine Anpassung der Reaktionsbedingungen an den Zustand des Mediums, d.h. im wesentlichen dessen Viskosität, vorgenommen wird, wodurch das Verweilzeitspektrum noch präziser gesteuert werden kann. Dies wird noch dadurch unterstützt, daß die ringförmigen Elemente gruppenweise den gleichen Anstellwinkel und den gleichen Spurpunkt aufweisen. Die gruppenweise Anordnung paralleler ringförmiger Elemente führt zu Zonen mit verringerter axialer Förderwirkung, d.h. es werden kaskadenartige Zonen gebildet, durch die das Verweilzeitverhalten für unterschiedliche Produkte entsprechend der Kinetik der Reaktion angepaßt werden kann.

Zur Erhöhung der kaskadierenden Wirkung von Scheiben in gruppenweiser Anstellung bei gleicher Spurpunkteinstellung können diese auch beispielsweise so ausgeführt werden, daß bei Anordnung einer Gruppe von drei Scheiben die mittlere Scheibe eine geringere oder entgegengesetzte Anstellung bzw. einen zurückverlegten Spurpunkt erhält, was den Mischeffekt innerhalb einer Kaskadengruppe günstig beeinflußt.

Die Konstruktion des Reaktors kann vereinfacht werden, da gruppenweise bzw. zonenweise gleiche Konstruktionsbedingungen vorgesehen sind.

Durch Vorsehen zusätzlicher Ringe, die am Innenumfang des Hohlzylinders befestigt sind, wird das Medium bzw. der entstehende Schaum gegen axiale Durchströmung und zur Verhinderung von direktem axialen Weiterfluß an den inneren Wänden des Hohlzylinders gebremst, wobei der Schaum insbesondere im Anfangsbereich des Reaktors, in dem die Entspannungs- und Hauptentgasungszone liegt und heftige Reaktionen ablaufen, entsteht.

Durch Vorsehen einer oder mehrerer Wehranordnungen wird das Medium gezielt umgelenkt, und es wird auch hierdurch eine Kaskadierungswirkung erreicht.

Vorteilhafterweise werden im Bereich höherer Viskosität Abstreifstäbe zwischen den ringförmigen Elementen im Sumpf des Mediums angeordnet, durch die Brückenbildungen zwischen den Scheiben sowie eine übermäßige Schrägstellung des Niveaus vermieden werden. Bei entsprechender Formgebung, z.B. in pflugscharähnlicher Form, tragen diese Abstreifstäbe zu Durchmischung und Förderung des Mediums bei.

Die Ausbildung des Auslasses als Austragkonus sowie ein vor dem Austragkonus angeordnetes Wehr und ein dort umlaufender Abstreifer und Rührer liefern einen gleichmäßigeren Austrittsstrom des Mediums, wobei das Wehr eine Abkopplung von der Drehbewegung darstellt, und es wird ein horizontales, meßbares Medienniveau erreicht, das unabhängig von der Geschwindigkeit des Korbrührers ist.

Zur Freihaltung der Behälteroberflächen oberhalb des Flüssigkeitsniveaus von Ablagerungen trägt die exzentrische Anordnung von Hohlzylinder und Reaktorgehäuse in Verbindung mit der Anordnung des Abgasstutzens am hinteren Ende des Reaktorgehäuses bei. Die durchströmenden Reaktionsdämpfe bewirken einen Wascheffekt, wobei gleichzeitig aufgrund der durch den beschriebenen Austrittskonus vergrößerten Austrittsfläche ein Sogeffekt an den besonders kritischen unteren Wandbereichen des Abgasstutzens und damit ein Mitreißen ("Entrainment") von Partikeln vermieden wird. Vorteilhaft zur Verringerung des Mitreißens ("Entrainment") wirkt sich die auch beschriebene Konstruktion des Hohlzylinders aus, da der Innenbereich des Hohlzylinders nicht durch geschlossene fallende Medienfilme sperrt. Das Medium fällt vielmehr in Strähnen zwischen den Öffnungen im Hohlzylinder hindurch, so daß genügend freie Fläche zum Abzug der Reaktionsdämpfe verbleibt, d.h. die Gasgeschwindigkeiten sind gering genug, um das Mitreißen von Produkt zu unterbinden.

Als weitere Maßnahme wird durch gezielte zusätzliche Beheizung im oberen Scheitelbereich des Gehäuses ein Anhaften von Oligomeren und die Bildung von unerwünschten Ablagerungen vermieden.

Zwei Ausführungsbeispiele der Erfindung werden in den Zeichnungen dargestellt und in der nachfolgenden Beschreibung näher erläutert. Es zeigen
- Fig. 1: einen Schnitt durch eine erfindungsgemäße Reaktorvorrichtung,
- Fig. 2: eine Aufsicht auf die in Fig. 1 verwendete Wehranordnung,
- Fig. 3: eine Aufsicht auf die in Fig. 1 zwischen den ringförmigen Elementen angeordneten stabförmigen Abstreifelemente,
- Fig. 4: eine Aufsicht auf das in Fig. 1 im Austragbereich vorgesehene Endwehr,
- Fig. 5: einen Schnitt durch eine zweite erfindungsgemäße Reaktorvorrichtung,
- Fig. 6: eine Ansicht der in Fig. 1 und/-oder Fig. 5 vorgesehenen stabförmigen und pflugscharförmigen Abstreifer, und
- Fig. 7: eine Aufsicht auf das in Fig. 5 im Austragungsbereich vorgesehene Endwehr.

### Beispiel 1:

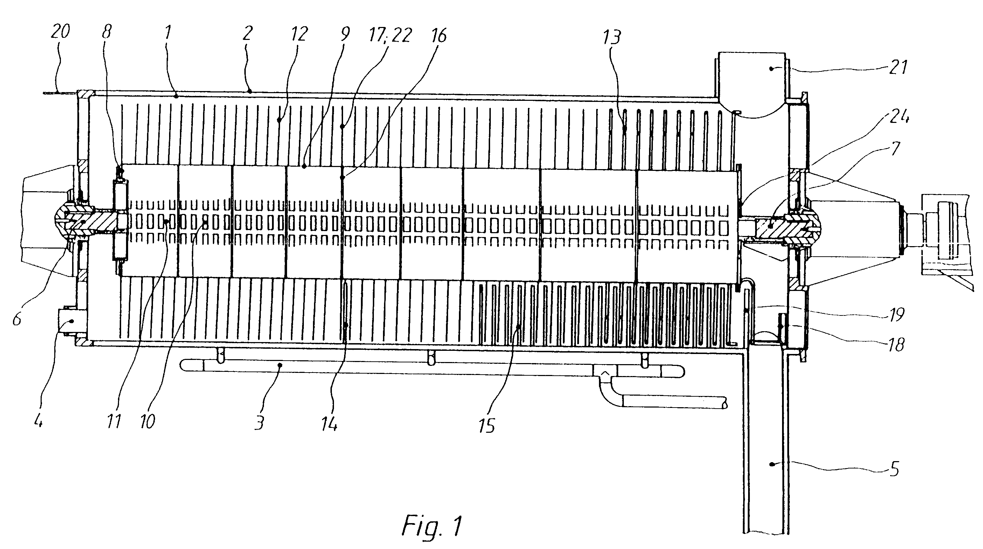

Der in Fig. 1 dargestellte Reaktor eignet sich besonders für fließfähige Medien. Er weist ein mit einem Heizmantel 2 versehenes Gehäuse 1 auf, wobei ein Wärmeträger über eine Rohrleitung 3 an mehreren Stellen, über die Länge des Gehäuses 1 gesehen, beidseitig in den Heizmantel 2 geleitet wird. Durch diese Maßnahme wird beim Aufheizen der gesamten Reaktorvorrichtung ein Verbiegen verhindert. In dem Gehäuse ist an einem Ende ein Einlaß 4 für den Polymereintritt und am anderen Ende ein Auslaß 5 für den Polymeraustritt vorgesehen. In dem Gehäuse 1 ist über Stummelwellen 6,7, die durch die Stirnwände des Gehäuses geführt sind, ein Rotor drehbar gelagert, wobei die Längsachse des Rotors 8 im Ausführungsbeispiel zu der Längsachse des Gehäuses 1 leicht nach unten (in Fig. 1 gesehen) versetzt ist, um im oberen Bereich etwas mehr Raum für die Reaktionsdämpfe, z.B. Glykol- und Aldehyddämpfe, oder sonstige Gase freizulassen. Am hinteren Ende des Gehäuses 1, in Förderrichtung des Polymers gesehen, ist ein Abgasstutzen 21 angeordnet.

Der Rotor 8 weist einen Hohlzylinder, einen zylindrischen Korb 9 auf, der mit rechteckförmigen Durchbrechungen 10 versehen ist, zwischen denen längs- und quergerichtete Stege 11 verbleiben, so daß sich eine gitterförmige Anordnung oder ein gitterförmiger Rahmen ergibt. Grundsätzlich wird mit Hohlzylinder 9 eine solche gitterförmige Anordnung bezeichnet, wobei die Art und Weise ihrer Herstellung nicht erfindungswesentlich ist. Vorteilhaft ist, wenn die Stege durchgehend ausgebildet sind. Auf der äußeren Oberfläche des Hohlzylinders 9 bzw. auf den Stegen 11 sind Lochscheiben 12 und Speichenräder 13 als Förderund Rührelemente, über die Länge des Rotors 8 gesehen, hintereinander fest angeordnet. Zwischen den Lochscheiben ist im unteren Bereich des Reaktorgehäuses 1, d.h. dort, wo sich der Polymersumpf befindet, zwischen zwei aufeinanderfolgenden Lochscheiben 12 bzw. Speichenrädern 13 mindestens eine Wehranordnung 14, 17 und stabförmige Abstreifer 15 vorgesehen.

Wie zu erkennen ist, ist der Reaktor über seine Länge in drei verschiedene Zonen aufgeteilt, wobei beispielsweise die Abstände der Ring- bzw. Lochscheiben 12 bzw. der Speichenräder 13 untereinander von Zone zu Zone variieren. Das heißt, daß die Abstände der Ringscheiben 12 im Eintrittsbereich kleiner als im Mittelbereich und diese wiederum kleiner als im Endbereich sind. Gleichfalls nimmt die Größe der Durchbrechungen 12 des Hohlzylinders 9 zu. Die Ringscheiben 12 sind über ihren gesamten Querschnitt mit einer Vielzahl von Löchern versehen, und die Speichenräder weisen Längs- und Querspeichen auf, wobei auch die Größe der Löcher, d.h. der freie Querschnitt der Ringscheiben 12 von vorn nach hinten zunimmt bzw. die Anzahl der Speichen 13 auch zonenweise abnimmt. Wie von den letzten drei Speichenrädern 13 zu erkennen ist, sind keine Querspeichen mehr vorhanden. Die Änderungen müssen über die Länge des Reaktors nicht zonenweise vorgenommen werden, sondern können kontinuierlich ausgeführt sein.

Wie aus der Figur zu erkennen ist, sind die Ringscheiben 12 und die Speichenräder 13 zu der Längsachse des Hohlzylinders 9 geneigt angeordnet, wobei die Anstellwinkel variieren können, d.h. die Anstellwinkel werden vom Eintritt des Polymers bis zu dessen Austritt kleiner. Die Anstellwinkel werden abhängig von dem zu bearbeitenden Material gewählt und liegen beispielsweise zwischen 0 und 4°, vorzugsweise zwischen 0,5 und 2,5°, wobei jedoch auch der Durchmesser der Scheiben bzw. Scheibenringe eine Rolle spielt. Was aus der Zeichnung nicht zu erkennen ist, ist, daß die Ringscheiben 12 bzw. die Speichenräder 13 gruppenweise so zueinander versetzt sind, daß ihre "Spurpunkte" auf einer Schraubenlinie bzw. Schneckenlinie liegen. Dabei wird unter "Spurpunkt" diejenige Stelle auf dem Umfang der Scheiben 12 bzw. Speichenräder 13 bezeichnet, die hinsichtlich der betrachteten Scheibe am nächsten zu der einen und am weitesten von der anderen Stirnwand des Gehäuses 1 liegt. Von den Scheiben 12 bzw. Speichenrädern 13 hat eine Gruppe, beispielsweise mehrere, hintereinanderliegender Scheiben den gleichen Spurpunkt, während die nächste Gruppe einen, in Umfangsrichtung gesehen, zu der ersten Gruppe versetzen Spurpunkt hat. Je nach gewünschter Verweildauer des Mediums in dem Reaktor wird der Winkel zwischen den Spurpunkten der hintereinanderliegenden Gruppen von Ringscheiben gewählt. Die Anstellwinkel der Scheiben 12 oder Speichenräder 13 können gruppen- oder zonenweise variieren. Bei einer Umdrehung der gesamten Gruppe wird das Medium in dem Bereich der Gruppe zu einem bestimmten Teil vor- und zurückgefördert, während ein anderer Teil in den Bereich der nächsten Gruppe gelangt. Auch dadurch wird eine Steuerung des Verweilzeitspektrums erreicht.

Das zu behandelnde Medium, das etwa 18 - 22 % des Gesamtvolumens des Reaktors einnimmt, wird durch die Bewegung der Ringscheiben 12 bzw. der Speichenräder 13 mitgezogen und läuft von diesen ab, wobei sich auch gleichzeitig an den Durchbrechungen 10 des Hohlzylinders 9 Fäden und freie Flächen bilden, die die Reaktion fördern. Der Außendurchmesser des Hohlzylinders 9 endet im unteren Bereich des Reaktors leicht unter der Füllstandshöhe des Mediums.

Im Innenraum des Hohlzylinders 9 sind in bestimmten Abständen zueinander, über seine Länge gesehen, Ringscheiben 16 befestigt, die einerseits den Schaum des Mediums bremsen und andererseits wiederum Abtropfelemente für das Medium bilden.

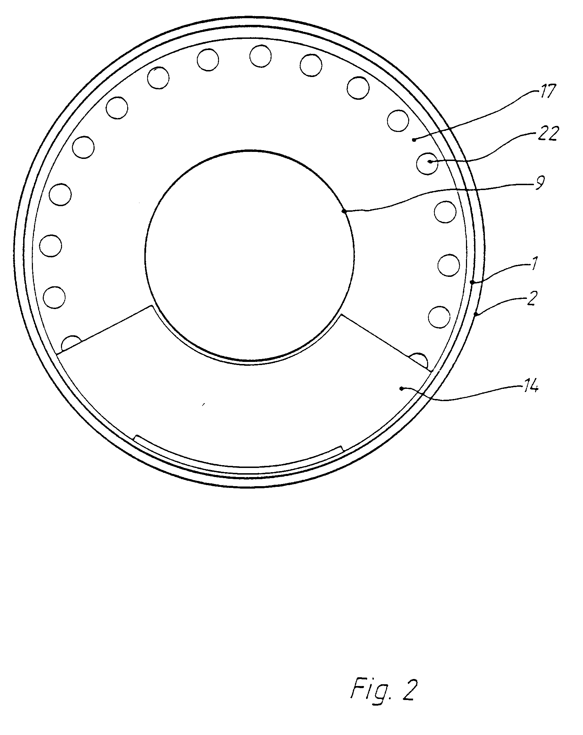

Hinter der ersten Zone ist gemäß Fig. 2 eine Wehranordnung vorgesehen, die sich aus einem in einem Winkel von 90° zu der Längsachse des Hohlzylinders 9 auf diesem angeordneten Scheibe 17 und einem Wehrblech 14 zusammensetzt. Das Wehrblech 14 ist fest mit dem Gehäuse 1 verbunden und reicht in etwa bis zu dem Hohlzylinder 9 und ist kreisbogenförmig ausgebildet. Die Scheibe 17 weist in ihrem äußeren Rand Löcher 22 auf, und das Wehrblech ist so angeordnet, daß zwischen Gehäuse 1 und unterem Rand des Wehrblechs 14 ein Spalt vorhanden ist. Das Medium wird durch diese Wehranordnung 17, 14 geleitet, und dies ist eine weitere Maßnahme, um das Verweilzeitspektrum zu steuern.

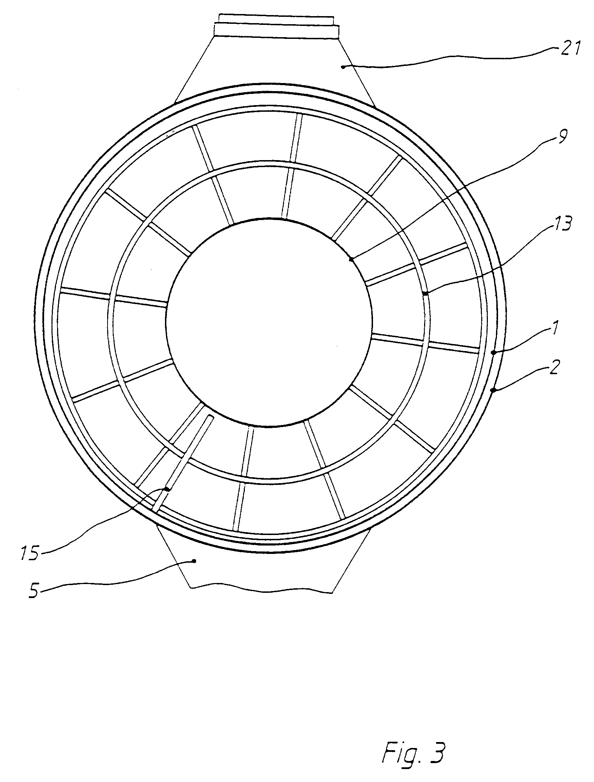

Im Sumpf des Mediums sind die Abstreiferstäbe entsprechend Fig. 3 an dem Gehäuse 1 befestigt, die in Drehrichtung versetzt schräg angeordnet sind und sich im Medium befinden. Diese Abstreiferstäbe 15 vermeiden bei der höheren Viskosität die Bildung von Brükken zwischen den Speichenrädern 13 und von Anhaftungen, und durch den Strömungswiderstand verringert sie darüber hinaus die Neigung des Mediums, der Drehrichtung folgend sich schräg auszubilden. Diese Abstreiferstäbe 15 können in ihrer Form beliebig gewählt werden, beispielsweise können sie einen runden oder stromlinienförmigen Querschnitt aufweisen. Sie können jedoch auch derart ausgebildet sein, daß sie die Förderwirkung auf das Medium bei höheren Viskositäten unterstützen, beispielsweise können sie in Förderrichtung schräg angestellt sein.

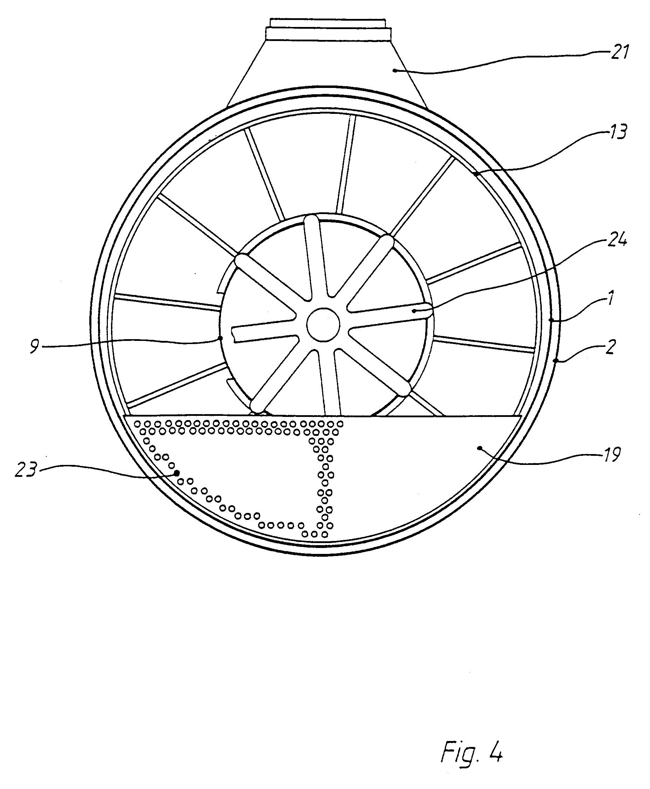

Der Auslaß 5 ist als abgeflachter Austragkonus ausgebildet, wodurch ein gleichmäßigerer Austrittsstrom erzielt wird. Die Austragung fördert darüber hinaus ein an dem Hohlzylinder 9 befestigter Rührerarm und Abstreifer 18, der sich mit dem Hohlzylinder 9 dreht und gleichzeitig die Stirnfläche des Gehäuses 1 abstreift und das Medium durchmischt. Weiterhin wird die gleichmäßigere Austragung durch Vorsehen eines Endwehrs 19 verbessert, das kreisabschnittförmig ausgebildet ist und mit dem Gehäuse 1 verbunden ist und eine Mehrzahl von feinen Lochungen 23 aufweist (Fig.4). Das Endwehr 19 ist in seiner Ansicht von dem Austragkonus 5 her gesehen. Der Hohlzylinder 9 ist an seinem Ende über einen Befestigungsstern 24 aus streifenförmigen Blechen mit der Stummelwelle 7 verbunden. Das dargestellte Endwehr 19 verhindert ein am Ende schrägstehendes Niveau des Mediums. Durch das horizontale Niveau wird eine bessere Durchstrahlungsmessung mit einer Kobaltstabanordnung oder andere Messungen zur Feststellung der Höhe des Niveaus vorgesehen.

Der Abgasstutzen 21 ist konisch ausgebildet, um die Austrittsfläche zu vergrößern, wodurch ein Mitziehen von Partikeln aufgrund einer Sogwirkung verringert wird. Im Heizmantel 2, und zwar im oberen Scheitelpunkt, ist eine Rohrschleife 20 angeordnet, durch die ein Wärmeträger strömt, der eine höhere Temperatur hat als der Wärmeträger des Heizmantels 2. Durch diese Maßnahme wird die Entstehung von Oligomerablagerungen vermieden.

### Beispiel 2:

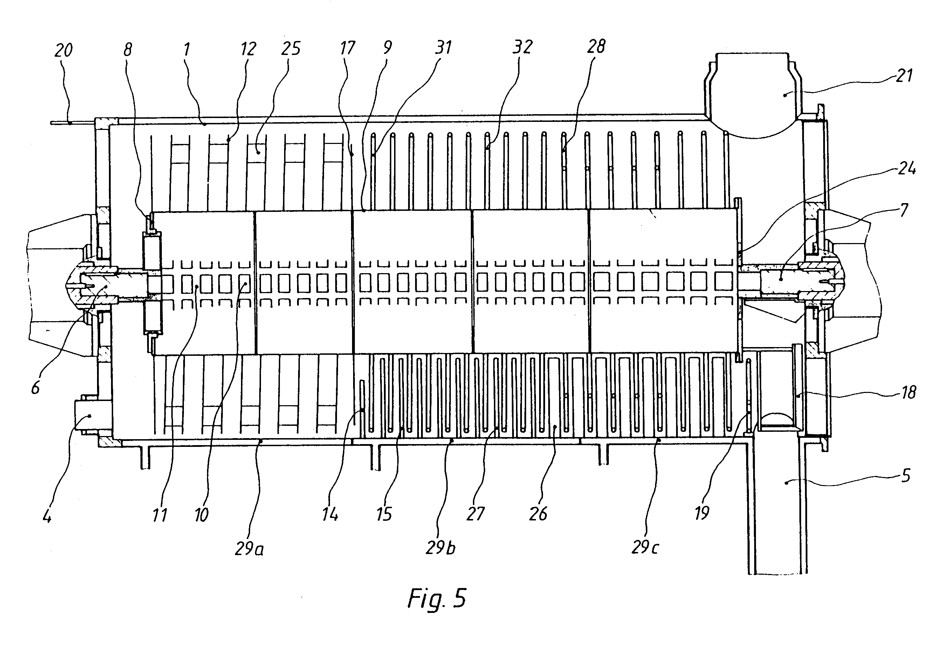

Der in Fig. 5 dargestellte Reaktor eignet sich insbesondere für höherviskose Medien. Er besitzt eine Grundstruktur, die dem in Fig. 1 dargestellten Reaktor vergleichbar ist und unterscheidet sich insbesondere durch die Formen und Anordnung der an dem Rotor befestigten ringförmigen Elemente 12, 13 und der an der Innenseite des Gehäuses 1 befestigten Abstreifer und Wehre.

Das Gehäuse 1 ist wie bei dem in Beispiel 1 geschilderten Reaktor mit einem Heizmantel 2 versehen. Dieser Heizmantel ist bei dieser Reaktoranordnung längs des Reaktors in 3 Zonen aufgeteilt. Da sich das Medium von dem Einlaß 4 zum Austragungskonus 5 bewegt - schreitet die Polykondensation längs des Reaktors fort. Durch die Aufteilung des Reaktors in mindestens drei Zonen 29a, 29b und 29c wird nun in jeder dieser Zonen die für die Polykondensation in dieser Zone optimale Temperatur eingestellt.

An der Oberseite des Reaktors befindet sich wiederum eine Rohrschleife 20, durch die ein Wärmeträger strömt, der eine Temperatur besitzt, die höher als die höchste der Temperaturen der drei Heizzonen ist. Damit wird im oberen Bereich des Reaktors die Ablagerung von Oligomeren verhindert.

Der Einlaß 4, der Austragungskonus 5 und der Abgasstutzen 21 sind wie in Beispiel 1 ausgebildet und angeordnet. In dem Gehäuse 1 ist der Rotor 8 über die Stummelwellen 6, 7 drehbar gelagert, wobei wiederum die Drehachse des Rotors 8 zu der Längsachse des Gehäuses 1 leicht nach unten versetzt ist. Der Rotor selbst besteht ebenfalls aus einem Hohlzylinder 9, der über einen Befestigungsstern 24 an der Stummelwelle 7 befestigt und wie in Beispiel 1 ausgeformt ist. Auch dieser Hohlzylinder besitzt Durchbrechungen 10 und dazwischenliegende Stege 11, wobei der freie Querschnitt der Durchbrechungen längs der Flußrichtung des Mediums zunimmt.

Auf der äußeren Oberfläche des Hohlzylinders 9 bzw. auf den Stegen 11 sind Ringelemente angebracht. Bezüglich der Bestückung mit den Ringelementen ist der Rotor in drei etwa gleich lange Zonen unterteilt. In der vorderen Zone sind die aus Beispiel 1 bekannten taumelnden Scheiben 12 leicht geneigt gegen die Drehachse des Rotors 8 angebracht. Im vorderen Teil des Reaktors ist die Viskosität des Mediums noch sehr gering. Daher befinden sich dort keine Abstreifstäbe.

Statt dessen sorgen Schöpfelemente 25 für eine kräftige Durchmischung des Mediums.

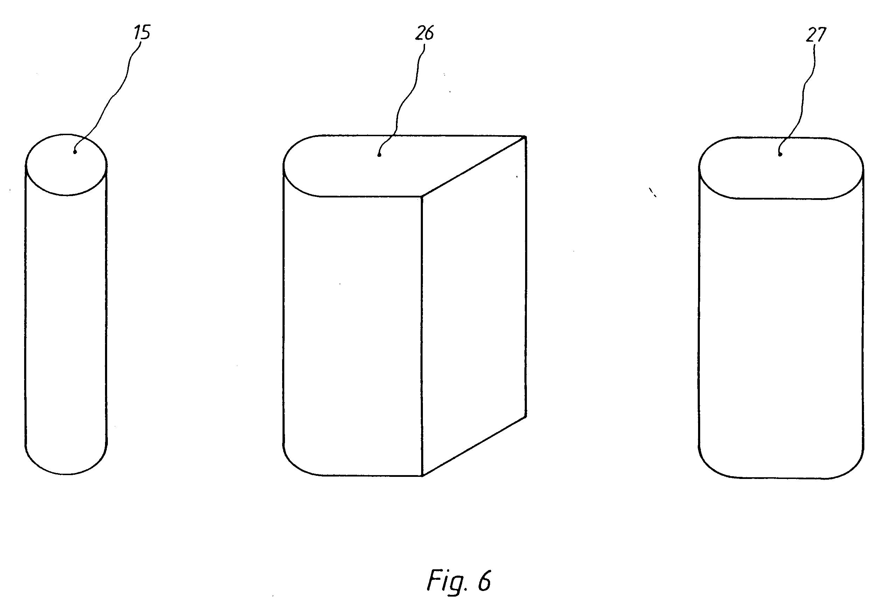

Im mittleren Bereich des Rotors sind als ringförmige Elemente gerade Speichenringe 31 und/oder gerade Rohrringe 32 ebenfalls leicht geneigt gegen die Drehachse des Rotors am Hohlzylinder 9 angebracht. Die Rohrringe 32 sind teilweise mit Maschendraht bespannt, um das Medium stärker zu mischen. Ihnen gegenüber stehen an der Innenseite des Gehäuses 1 senkrecht zur Drehachse des Rotors montierte stabförmige Abstreifer 15, 27, wie sie in Fig. 6 dargestellt sind. Sie verbessern ebenfalls die Durchmischung des Mediums und verhindern die Ausbildung von Polymerbrücken zwischen den Rohr- oder Speichenringen. Da die Rohr- und Speichenringe gegen die Abstreifstäbe geneigt sind, erfolgt die Reinigung der Ringe von anhaftendem Polymer nicht vollständig.

Im letzten Teil des Reaktors sind als ringförmige Elemente Rohr- und/oder Speichenringe 28 an der Außenseite des Hohlzylinders 9 senkrecht zur Drehachse des Rotors befestigt. Dies hat zur Folge, daß durch die Ringelemente in diesem Bereich keine Förderung des Mediums erfolgt. Daher sind in diesem Bereich die Abstreifstäbe in Form einer Pflugschar 26 ausgebildet, wie in Fig. 6 gezeigt. Durch diese pflugscharförmigen Abstreifer 26 wird das Medium nicht nur durchmischt, sondern auch in Richtung des Austragungskonus 5 gefördert.

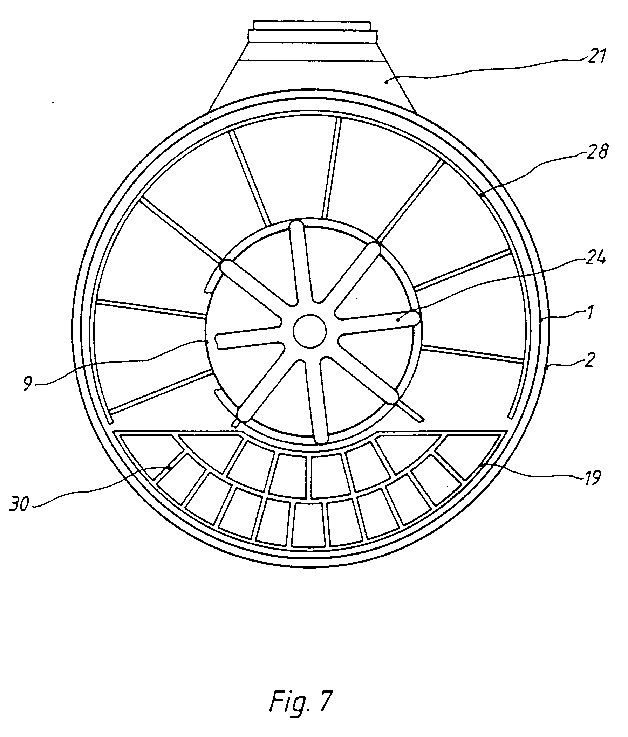

Unmittelbar vor dem Austragungskonus 5 befindet sich ein Rührarm mit Abstreifer 18 und ein gitterförmiges Austrittswehr 19, das aus einem Rohrgestänge 30 wie in Fig. 7 besteht. Dieses Wehr führt zu einer Abkopplung des Mediums von der Drehbewegung des Rotors und es entsteht ein horizontales, meßbares Medienniveau, das unabhängig von der Geschwindigkeit des Rotors oder der Fördergeschwindigkeit der fördernden Elemente ist.

Auch bei dieser Reaktoranordnung hat es sich für die Homogenität der Polykondensate als vorteilhaft erwiesen, ca. 18 - 22 % des Reaktorvolumens mit Medium zu füllen.

## Patentansprüche

1. Reaktorvorrichtung für fließfähige Medien, insbesondere für Polymere zur Polykondensation von Polyestern mit einem liegend angeordneten Gehäuse, das an einem Ende einen Einlaß für die Zufuhr des Mediums und am anderen Ende einen Auslaß für dessen Austragung aufweist, und mit einem in dem Gehäuse über Stummelwellen drehbar gelagerten Rotor, der ringförmige Elemente zum Bewegen und/oder Fördern des Mediums aufweist, **dadurch gekennzeichnet**, daß der Rotor (8) einen mit den Stummelwellen (6,7) verbundenen und mit Durchbrechungen (10) versehenen Hohlzylinder (9) aufweist, auf dem die ringförmigen Elemente (12,13) befestigt sind.

2. Reaktorvorrichtung nach Anspruch 1, dadurch gekennzeichnet, daß die ringförmigen Elemente zur Rotationsachse zumindest teilweise geneigt angeordnet sind.

3. Reaktorvorrichtung nach Anspruch 2, dadurch gekennzeichnet, daß die ringförmigen Elemente zur Rotationsachse derart geneigt angeordnet sind, daß ihre Spurpunkte über die Länge des Rotors eine Schraubenlinie bilden, wobei als Spurpunkt derjenige Punkt auf dem Umfang des jeweiligen ringförmigen Elementes (12,13) bezeichnet wird, der in bezug auf eine der beiden Stirnseiten des Gehäuses (1) den kleinsten Abstand aufweist.

4. Reaktorvorrichtung nach Anspruch 3, dadurch gekennzeichnet, daß die freien Querschnitte sowie der Spalt zwischen Gehäuse und Außendurchmesser der ringförmigen Elemente (12, 13) so gewählt werden, daß die drehenden ringförmigen Elemente dem freien ungehinderten Fluß des Mediums einen Widerstand entgegensetzen, der kleiner ist als die durch den Spurpunktversatz erreichte Förderung des Mediums.

5. Reaktorvorrichtung nach einem der vorhergehenden Ansprüche, dadurch gekennzeichnet, daß die Anstellwinkel der ringförmigen Elemente (12,13) in Förderrichtung, nämlich mit steigender Viskosität des Mediums, abnehmen.

6. Reaktorvorrichtung nach einem der vorhergehenden Ansprüche, dadurch gekennzeichnet, daß die ringförmigen Elemente (12,13) zumindest teilweise gruppenweise den gleichen Anstellwinkel in bezug auf die Rotationsachse und/oder den gleichen Spurpunkt aufweisen.

7. Reaktorvorrichtung nach einem der vorhergehenden Ansprüche, dadurch gekennzeichnet, daß in Förderrichtung die freien Querschnitte der ringförmigen Elemente (12, 13) und/oder die Abstände der ringförmigen Elemente zunehmen.

8. Reaktorvorrichtung nach einem der vorhergehenden Ansprüche, dadurch gekennzeichnet, daß die Veränderung der Anstellwinkel sowie die Zunahme der freien Querschnitte und der Abstände der ringförmigen Elemente zonenweise erfolgt.

9. Reaktorvorrichtung nach einem der vorhergehenden Ansprüche, dadurch gekennzeichnet, daß die ringförmigen Elemente als Ringscheiben (12) und/oder Speichenräder (13) ausgebildet sind.

10. Reaktorvorrichtung nach Anspruch 9, dadurch gekennzeichnet, daß die ringförmigen Elemente (12, 13) mit Maschendraht bespannt sind.

11. Reaktorvorrichtung nach einem der vorhergehenden Ansprüche, dadurch gekennzeichnet, daß zumindest teilweise und/oder zonenweise zwischen den ringförmigen Elementen Schöpfelemente (25) angebracht sind.

12. Reaktorvorrichtung nach einem der vorhergehenden Ansprüche, dadurch gekennzeichnet, daß die Durchbrechungen (10) des Hohlzylinders rechteckförmig mit durchgehenden Stegen ausgebildet sind und die Querschnitte der Durchbrechungen in Flußrichtung des Mediums, vorzugsweise zonenweise, vergrößert werden.

13. Vorrichtung nach einem der Ansprüche 1 bis 7, dadurch gekennzeichnet, daß an dem inneren Umfang des Hohlzylinders (9) Ringscheiben (16) als Durchströmbremse befestigt sind.

14. Reaktorvorrichtung nach einem der Ansprüche 1 bis 9, dadurch gekennzeichnet, daß in dem Gehäuse (1) mindestens eine Wehranordnung (14,17) zwischen den ringförmigen Elementen (12,13) angeordnet ist, die vorzugsweise ein im wesentlichen über die gesamte Füllstandshöhe reichendes Wehrblech (14) und eine senkrecht mit dem Hohlzylinder verbundene Scheibe (17) aufweist.

15. Reaktorvorrichtung nach einem der vorhergehenden Ansprüche, dadurch gekennzeichnet, daß stabartige Abstreifelemente (15) im Bereich des Mediums zwischen den ringförmigen Elementen (12,13), vorzugsweise im mittleren oder hinteren Bereich des Rotors, an dem Gehäuse (1) befestigt sind, die zur Vermeidung von Anhaftungen und übermäßiger Mitnahme von viskosem Medium zwischen jeweils einem Paar der ringförmigen Elemente (12,13) dienen.

16. Reaktorvorrichtung nach Anspruch 15, dadurch gekennzeichnet, daß die stabartigen Abstreifelemente (15) zumindest teilweise eine Form, vorzugsweise ähnlich einer Pflugschar (26), aufweisen, die die Förderwirkung unterstützt.

17. Reaktorvorrichtung nach einem der vorhergehenden Ansprüche, dadurch gekennzeichnet, daß der Auslaß (5) für das Medium als abgeflachter Austragkonus ausgebildet ist.

18. Reaktorvorrichtung nach einem der vorhergehenden Ansprüche, dadurch gekennzeichnet, daß vor dem Auslaß (5) für das Medium ein Endwehr (19) über im wesentlichen die gesamte Füllstandshöhe angeordnet ist, wobei das Endwehr (19) vorzugsweise entweder feine Lochungen (23) aufweist oder aus einem Rohrgestänge (30) besteht.

19. Reaktorvorrichtung nach Anspruch 17 oder 18, dadurch gekennzeichnet, daß im Austragbereich des Austragkonus ein Rührer (18) und Abstreifer angeordnet ist, der mit dem Hohlzylinder (9) verbunden ist.

20. Reaktorvorrichtung nach einem der vorhergehenden Ansprüche, dadurch gekennzeichnet, daß der Hohlzylinder (9) zur Vergrößerung des Gasraums zum Gehäuse (1) exzentrisch gelagert ist.

21. Reaktorvorrichtung nach einem der vorhergehenden Ansprüche, dadurch gekennzeichnet, daß ein Abgasstutzen (21), in Förderrichtung gesehen, im hinteren Bereich des Gehäuses (1) angeordnet ist und vorzugsweise zur Verkleinerung der Gasaustrittsgeschwindigkeit am Gasdurchtritt einen größeren Querschnitt aufweist als die dann folgende Gasabsaugleitung.

22. Reaktorvorrichtung nach einem der vorhergehenden Ansprüche, dadurch gekennzeichnet, daß die Gehäusewand als von einem Wärmeträger durchströmter Heizmantel (2) ausgebildet ist.

23. Reaktorvorrichtung nach Anspruch 22, dadurch gekennzeichnet, daß der Heizmantel (2) in Flußrichtung in mehrere, vorzugsweise drei, unterschiedlich beheizbare Zonen (29) unterteilt ist.

24. Reaktorvorrichtung nach einem der vorhergehenden Ansprüche, dadurch gekennzeichnet, daß im oberen Scheitelbereich des Gehäuses (1) zur Vermeidung von Oligomerablagerungen eine zusätzliche Heizzone (20) mit höherer Temperatur als im Reaktionsraum vorgesehen ist.

25. Reaktorvorrichtung nach einem der vorhergehenden Ansprüche, dadurch gekennzeichnet, daß der Durchmesser des Hohlzylinders (9) abhängig von dem Füllstand des Mediums gewählt wird, wobei das Medium etwa 18 - 22 % des Gesamtvolumens des Gehäuses einnimmt.

## Claims

1. Reactor for free-flowing media, in particular polymers for poly-condensation of polyesters with a housing which is designed to be lying down and comprising at one end an inlet for delivery of the medium and at the other end an outlet for its discharge, and a rotor which is mounted in the housing so as to be rotary via stubshafts which has ringshaped elements for moving and/or conveying the medium, **characterised in that** the rotor (8) comprises a tubular cylinder (9), which is connected to the stubshafts (6, 7) and provided with channels (10), on which the ringshaped elements (12, 13) are mounted.

2. Reactor according to Claim 1, **characterised in that** the ringshaped elements are arranged at least partially at a slant towards the rotary axis.

3. Reactor according to Claim 3, **characterised in that** the ringshaped elements are arranged at a slant towards the rotary axis in such a manner that their track points form a screw line over the length of the rotor, in which respect track point describes the point on the periphery of a respective ringshaped element (12, 13) with the smallest distance relative to one of the two end surfaces of the housing (1).

4. Reactor according to Claim 3, **characterised in that** the free cross-sections as well as the gap between housing and outside diameter of the ringshaped elements (12, 13) are chosen so that the rotating ringshaped elements offer the free unimpeded flow of the medium a resistance which is less than the conveying of medium achieved by offset of the track points.

5. Reactor according to one of the above claims, **characterised in that** the application angles of the ringshaped elements (12, 13) decrease in the conveying direction, i.e. with increasing viscosity of the medium.

6. Reactor according to one of the above claims, **characterised in that** the ringshaped elements (12, 13) have at least partially in groups the same application angle relative to the rotary axis and/or the same track point.

7. Reactor according to one of the above claims, **characterised in that** the free cross-sections of the ringshaped elements (12, 13) and/or the gaps of the ringshaped elements increase in the conveying direction.

8. Reactor according to one of the above claims, **characterised in that** the change in application angle and the increase of the free cross-sections and the gaps of the ringshaped elements is performed in zones.

9. Reactor according to one of the above claims, **characterised in that** the ringshaped elements are designed as annular discs (12) and/or spoke wheels (13).

10. Reactor according to Claim 9, **characterised in that** the ringshaped elements (12, 13) are clamped with wire mesh.

11. Reactor according to one of the above claims, **characterised in that** ladle elements (25) are fitted at least partially and/or in zones between the ringshaped elements.

12. Reactor according to one of the above claims, **characterised in that** the channels (10) of the tubular cylinder are designed to be rectangular with continuous webs, and the cross-sections of the channels are increased in the flow direction of the medium, preferably in zones.

13. Reactor according to one of Claims 1 to 7, **characterised in that** annular discs (16) serving as throughflow retarders are mounted in the inner periphery of the tubular cylinder (9).

14. Reactor according to one of Claims 1 to 9, **characterised in that** in housing (1) is accommodated at least one reinforcing arrangement (14, 17) between the ringshaped elements (12, 13), preferably including a resistance plate (14) which essentially extends over the entire filler level and a plate (17) which is vertically connected to the tubular cylinder.

15. Reactor according to one of the above claims, **characterised in that** rodshaped scraping elements (15) are attached to the housing (1) in the area of the medium between the ringshaped elements (12, 13), preferably in the middle or rear area of the rotor, serving to prevent adhesion and excessive pickup of viscous medium between a respective pair of the ringshaped elements (12, 13).

16. Reactor according to Claim 15, **characterised in that** the rodshaped scraping elements (15) are at least partially of a shape, preferably resembling a ploughshare (26), which assists the conveying effect.

17. Reactor according to one of the above claims, **characterised in that** the outlet (5) for the medium is designed as a flattened discharge cone.

18. Reactor according to one of the above claims, **characterised in that** upstream of the outlet (5) for the medium is arranged an end resistance (19) over essentially the entire filler level, and the end resistance (19) preferably comprises either fine perforations (23) or is made of a tubular rod arrangement (30).

19. Reactor according to Claim 17 or 18, **characterised in that** an adjutator (18) and scraper which is connected to the tubular cylinder (9) is arranged in the discharge area of the discharge cone.

20. Reactor according to one of the above claims, **characterised in that** the tubular cylinder (9) is mounted eccentrically to the housing (1) so as to increase the gas area.

21. Reactor according to one of the above claims, **characterised in that** a waste gas socket (21) is arranged, as seen in the conveying direction, in the rear area of the housing (1) and preferably has at the gas passage a larger cross-section than the downstream gas suction pipe so as to reduce the gas discharge speed.

22. Reactor according to one of the above claims, **characterised in that** the housing wall is designed as a radiator (2) which is flowed through by a heat carrier.

23. Reactor according to Claim 22, **characterised in that** the radiator (2) is in the flow direction divided into a plurality, preferably three, zones (29) which can be heated differently.

24. Reactor according to one of the above claims, **characterised in that** in the upper intersection area of the housing (1) is provided an additional heating zone (20) of higher temperature than in the reactor area so as to prevent oligomer deposits.

25. Reactor according to one of the above claims, **characterised in that** the diameter of the tubular cylinder (9) is chosen in dependence of the filling level of the medium, and the medium takes up between approximately 18 and 22% of the total volume of the casing.

## Revendications

1. Réacteur pour milieux aptes à s'écouler notamment pour des polymères pour la polycondensation de polyesters, comportant une enceinte allongée, qui possède, à une extrémité, une entrée pour l'amenée du milieu et, à l'autre extrémité, une sortie pour l'évacuation du milieu, et un rotor monté de manière à pouvoir tourner dans l'enceinte par l'intermédiaire de bouts d'arbres et qui comporte des éléments de forme annulaire pour déplacer et/ou entraîner le milieu, caractérisé en ce que le rotor (8) comporte un cylindre creux (9), qui est relié aux bouts d'arbres (6, 7) et pourvu d'ouvertures (10) et sur lequel sont fixés les éléments de forme annulaire (12, 13).

2. Réacteur selon la revendication 1, caractérisé en ce que les éléments de forme annulaire sont montés en étant au moins partiellement inclinés par rapport à l'axe de rotation.

3. Réacteur selon la revendication 2, caractérisé en ce que les éléments de forme annulaire sont disposés en étant inclinés par rapport à l'axe de rotation de telle sorte que leurs points de trace sur la longueur du rotor forment une ligne hélicoïdale, l'expression point de trace désignant le point qui est situé sur la périphérie de l'élément respectif de forme annulaire (12, 13) et est séparé par la distance la plus faible par rapport à l'une des deux faces frontales de l'enceinte (1).

4. Réacteur selon la revendication 3, caractérisé en ce que les sections transversales libres ainsi que la fente entre l'enceinte et la périphérie extérieure des éléments de forme annulaire (12, 13) sont choisies de telle sorte que les éléments rotatifs de forme annulaire opposent au flux libre et non gêné du milieu une résistance qui est inférieure à l'entraînement du milieu, obtenu au moyen du décalage des points de projection.

5. Réacteur selon l'une des revendications précédentes, caractérisé en ce que les angles de montage des éléments annulaires (12, 13) diminuent dans la direction d'entraînement, à savoir lorsque la viscosité du milieu augmente.

6. Réacteur selon l'une des revendications précédentes, caractérisé en ce que les éléments de forme annulaire (12, 13) possèdent au moins en partie par groupes le même angle de montage par rapport à l'axe de rotation et/ou par rapport au même point de trace.

7. Réacteur selon l'une des revendications précédentes, caractérisé en ce que les sections transversales libres des éléments de forme annulaire (12, 13) et/ou les distances séparant les éléments de forme annulaire augmentent dans la direction d'entraînement.

8. Réacteur selon l'une des revendications précédentes, caractérisé en ce que la variation des angles de montage ainsi que l'accroissement des sections transversales libres et des distances des éléments de forme annulaire sont réalisés par zones.

9. Réacteur selon l'une des revendications précédentes, caractérisé en ce que les éléments de forme annulaire sont agencés sous la forme de disques annulaires (12) et/ou de roues à rayons (13).

10. Réacteur selon la revendication 9, caractérisé en ce que les éléments de forme annulaire (12, 13) sont recouverts d'un treillis de fil.

11. Réacteur selon l'une des revendications précédentes, caractérisé en ce que des éléments à godets (25) sont disposés au moins en partie et/ou par zones entre les éléments de forme annulaire.

12. Réacteur selon l'une des revendications précédentes, caractérisé en ce que les ouvertures (10) du cylindre creux sont réalisées avec des barrettes continues de manière à avoir une forme rectangulaire et que les sections transversales des ouvertures dans la direction de circulation du milieu sont accrues, de préférence par zones.

13. Réacteur selon l'une des revendications 1 à 7, caractérisé en ce que des disques annulaires (16) en tant que freins d'écoulement sont fixés sur la périphérie intérieure du cylindre creux (9).

14. Réacteur selon l'une des revendications 1 à 9, caractérisé en ce que dans l'enceinte (1) est disposé, entre les éléments de forme annulaire (12, 13), un dispositif formant barrage (14, 17), qui possède de préférence une tôle de barrage (14) qui s'étend essentiellement sur toute la hauteur de remplissage et un disque (17) relié perpendiculairement au cylindre creux.

15. Réacteur selon l'une des revendications précédentes, caractérisé en ce que des éléments de raclage (15) en forme de barres sont fixés à l'enceinte (1) dans la zone du milieu situé entre les éléments de forme annulaire (12, 13) et de préférence dans la partie centrale ou arrière du rotor, ces éléments de raclage servant à éviter des adhérences et un entraînement excessif du milieu visqueux entre les deux éléments respectifs d'un couple d'éléments de forme annulaire (12, 13).

16. Réacteur selon la revendication 15, caractérisé en ce que les éléments de raclage (15) en forme de barres possèdent au moins en partie une forme de préférence semblable à celle d'un soc de charrue (26), qui assiste l'action d'entraînement.

17. Réacteur selon l'une des revendications précédentes, caractérisé en ce que la sortie (5) pour le milieu est agencé sous la forme d'un cône de sortie aplati.

18. Réacteur selon l'une des revendications précédentes, caractérisé en ce qu'un barrage d'extrémité (19) est disposé en amont de la sortie (5) pour le milieu, essentiellement sur toute l'étendue en hauteur jusqu'au niveau de remplissage, le barrage d'extrémité (19) comportant de préférence de fines perforations (23) ou bien étant constitué par une tringlerie (30) formée de tubes.

19. Réacteur selon la revendication 17 ou 18, caractérisé en ce que dans la zone de sortie du cône de sortie sont disposés un agitateur (18) et une racle, qui est reliée au cylindre creux (9).

20. Réacteur selon l'une des revendications précédentes, caractérisé en ce que le cylindre creux (9) est monté d'une manière excentrée par rapport à l'enceinte (1) de manière à accroître l'espace contenant le gaz.

21. Réacteur selon l'une des revendications précédentes, caractérisé en ce que, vu dans la direction de circulation, une tubulure des gaz d'échappement (21) est disposée dans la partie arrière de l'enceinte (1) et possède, de préférence pour réduire la vitesse de sortie des gaz au niveau de la traversée pour le gaz, une section transversale supérieure à celle de la canalisation d'aspiration des gaz, qui est disposée en aval.

22. Réacteur selon l'une des revendications précédentes, caractérisé en ce que la paroi de l'enceinte est agencée sous la forme d'une enveloppe chauffante (2) parcourue par un fluide caloporteur.

23. Réacteur selon la revendication 22, caractérisé en ce que l'enveloppe chauffante (2) est subdivisée, dans la direction de circulation, en plusieurs, de préférence trois zones (22) pouvant être chauffées différemment.

24. Réacteur selon l'une des revendications précédentes, caractérisé en ce que dans la partie sommitale supérieure de l'enceinte (1) est disposée une zone de chauffage supplémentaire (20) ayant une température supérieure à celle de la chambre réactionnelle, pour éviter des dépôts d'oligomères.

25. Réacteur selon l'une des revendications précédentes, caractérisé en ce que le diamètre du cylindre creux (9) est choisi en fonction du niveau de remplissage du milieu, le milieu occupant environ 18-22 % du volume total de l'enceinte.
